# EUROPÄISCHE PATENTANMELDUNG

(11) **EP 2 409 904 A1**
(43) Veröffentlichungstag der Anmeldung: **25.01.2012**
(21) Anmeldenummer: 11174526.1
(22) Anmeldetag: 19.07.2011
(51) Int. Cl.: B62J 7/04, B62M 6/90

(54) **Gepäckträger mit Energiespeicher**

(30) Priorität: 19.07.2010 DE 102010036497; 17.08.2010 DE 102010037025
(71) Anmelder: Ronge, Peter, 48145 Münster (DE)
(72) Erfinder: Ronge, Peter, 48145 Münster (DE)
(74) Vertreter: Habbel, Ludwig

(57) **Zusammenfassung**

Bei einem Hinterrad-Gepäckträger (8) eines Fahrrads, mit einer oberhalb des Hinterrades angeordneten Ladefläche (9), Tragelementen (14) zur Gepäckaufnahme, und einem in einem Gehäuse (10) angeordneten Energiespeicher für elektrische Energie, schlägt die Erfindung vor, dass das Gehäuse (10) des Energiespeichers die Tragelemente (14) zur Gepäckaufnahme aufweist.

## Beschreibung

Die Erfindung betrifft einen Hinterrad-Gepäckträger eines Fahrrads nach dem Oberbegriff des Anspruchs 1.

Aus der Praxis sind derartige Gepäckträger bekannt, beispielsweise vom Fahrradmodell "E-motion C2" der niederländischen Fahrradmarke "Sparta". Dieser Gepäckträger weist einen Energiespeicher für elektrische Energie auf, der mitsamt seinem Gehäuse als "Akkubox" bezeichnet wird. Der Gepäckträger bildet oberhalb des Hinterrades zwei liegend ausgerichtete Ebenen, die jeweils mit den aufrecht verlaufenden Tragstreben verbunden und von diesen gehalten sind. Zwischen diesen beiden liegenden Ebenen ist die Akkubox angeordnet, und die obere Ebene bildet eine Ladefläche, die zur Aufnahme von Gepäck vorgesehen ist.

Als Gepäck werden im Rahmen des vorliegenden Vorschlags Behälter bezeichnet, die beispielsweise als verformbare Tasche ausgestaltet sein können, welche aus textilen Werkstoffen oder aus Kunststoff bestehen können, oder die als Korb ausgestaltet sein können, welcher Wände mit einem gewissen Lochanteil aufweist, oder die als Box mit festen, geschlossenen Wänden ausgestaltet sein können. Jedenfalls werden die vorschlagsgemäßen Tragelemente, die zur Aufnahme von solchem Gepäck dienen und dementsprechend konstruktiv ausgestaltet sind, aufgrund der vorschlagsgemäßen Definition von "Gepäck" unterschieden von Tragelementen, die beispielsweise als so genannte Federklappe ausgestaltet sind. Diese dienen zum Halten von leichten Lasten wie beispielsweise Zeitschriften, einer Jacke oder einem Mantel, und vermögen volumenmäßig größere bzw. gewichtsmäßig schwerere Lasten nicht sicher zu halten.

Die im Sinne des vorliegenden Vorschlags für das Halten von "Gepäck" vorgesehenen Tragelemente tragen hingegen die das Gepäck bildenden Behälter zuverlässig. Dabei können diese Tragelemente, wie aus der Praxis bekannt, beispielsweise entweder als Stangen bzw. Rohre ausgestaltet sein, an welche das Gepäck mit beispielsweise hakenförmigen, nach unten offenen Haltebügeln angehängt werden kann, oder sie können in Art einer Systemhalterung als ein erstes Teil eines Halters und Verschlusses ausgestaltet sein, der mit einem komplementären zweiten Teil zusammenwirkt, welches am Gepäck vorhanden ist.

Da das Gepäck, wenn es beispielsweise nach einem Einkauf mit Getränken und dergleichen gefüllt ist, ein im Vergleich zum Fahrrad selbst hohes Gewicht von mehreren Kilogramm aufweisen kann, kann die Art bzw. Position seiner Anordnung das Fahrverhalten des Fahrrades erheblich beeinflussen, beispielsweise durch einen hohen Schwerpunkt nachteilig beeinflussen.

Die Akkubox dient zur Versorgung eines Elektromotors, wobei je nach Konzeption des elektrisch angetriebenen Fahrrads dieser Motor als alleiniger Antrieb oder unterstützend zum Pedalantrieb vorgesehen sein kann. Dementsprechend sind Gewicht und Größe des elektrischen Energiespeichers und der gesamten Akkubox ebenfalls recht beachtlich, jedenfalls sehr viel höher als bei Energiespeichern, wie sie beispielsweise für die elektrische Beleuchtung des Fahrrads bei bestimmten Fahrradmodellen vorgesehen sein können. Der damit einhergehende vergleichsweise hohe Schwerpunkt, den das Fahrrad durch die Anordnung der Akkubox weit oberhalb des Hinterrades aufweist, ist nachteilig. Er wird hier jedoch in Kauf genommen, da die Anordnung des Energiespeichers im Bereich des Hinterrad-Gepäckträgers für die Zugänglichkeit zum Energiespeicher sehr vorteilhaft ist und beispielsweise eine problemlose Entnahme des Energiespeichers ermöglichen kann, so dass dieser zum Aufladen problemlos vom Fahrrad bzw. vom Gepäckträger abgenommen werden kann und beispielsweise ins Haus getragen werden kann, um witterungsgeschützt in einem trockenen Raum aufgeladen zu werden.

Die beiden Ebenen, die der gattungsgemäße Gepäckträger oberhalb und unterhalb der Akkubox ausbildet und von denen die eine als Ladefläche des Gepäckträgers zur Aufnahme von Gepäck dient, sind ebenfalls insofern nachteilig, als die Ladefläche notwendigerweise breiter sein muss als die Akkubox, denn nur durch den seitlichen Überstand der Ladefläche ist sichergestellt, dass an die entsprechenden Streben der Ladefläche Gepäckstücke angehängt werden können, so dass sich beispielsweise Haltehaken, die an Fahrrad-Gepäcktaschen vorgesehen sind, über die jeweilige Strebe und seitlich neben der Akkubox nach unten strecken können.

Ebenso wie der hohe Schwerpunkt ist diese vergleichsweise große Breite des Gepäckträgers für die Fahrdynamik bzw. Fahrstabilität des Fahrrads nachteilig. Zudem ist die Belastung des Gepäckträgers selbst umso größer, je weiter die entsprechenden Haltestreben der Ladefläche auseinander liegen, je breiter also die Ladefläche ist, denn mit zunehmender Breite werden die Hebelkräfte größer, mit denen das Gewicht des Gepäcks den Gepäckträger belastet.

Der Erfindung liegt die Aufgabe zugrunde, einen gattungsgemäßen Hinterrad-Gepäckträger dahingehend zu verbessern, dass dieser die Fahreigenschaften des Fahrrads unterstützend und seinerseits ein möglichst hohes Maß an Stabilität aufweisend ausgestaltet ist.

Diese Aufgabe wird durch einen Hinterrad-Gepäckträger mit den Merkmalen des Anspruchs 1 gelöst.

Die Erfindung schlägt mit anderen Worten vor, das Gehäuse des Energiespeichers in die Struktur des Gepäckträgers in der Weise einzubeziehen, dass das Gehäuse des Energiespeichers Tragelemente zur Gepäckaufnahme aufweist. Auf diese Weise kann einerseits ein Gepäckstück optimal nah an die Mittelachse des Fahrrades gebracht werden, da die Tragelemente zur Gepäckaufnahme nicht seitlich über eine Akkubox oder ein vergleichbares Gehäuse hinausragen müssen, und weiterhin wird die Fahrstabilität des Fahrrads dadurch begünstigt, dass die Tragelemente zur Gepäckaufnahme nicht oberhalb einer solchen Akkubox oder eines vergleichbaren Gehäuses angeordnet werden müssen, beispielsweise als Teile des Gepäckträgers, sondern dass vielmehr auf derartige Teile verzichtet werden kann, da die Tragelemente in dem Gehäuse des Energiespeichers vorgesehen sind.

Je nach Platzbedarf des Energiespeichers, also beispielsweise abhängig von dem Energieverbrauch des verwendeten Elektromotors bzw. von der Speicherdichte und Kapazität des elektrischen Energiespeichers, kann beispielsweise vorgesehen sein, den Gepäckträger nicht ausschließlich aus Streben aus einem Vollmaterial herzustellen, beispielsweise aus Aluminiumstäben, sondern vielmehr aus rohrförmigen, hohlen Streben, so dass der Energiespeicher in einer solchen Strebe angeordnet werden kann. Der beispielsweise lediglich aus mehreren Streben bestehende Gepäckträger bildet somit selbst das Gehäuse für den Energiespeicher aus und kann in an sich bekannter Weise durch seine Streben die jeweils gewünschten Tragelemente zur Gepäckaufnahme bilden. Dabei kann vorgesehen sein, im Bereich dieser Tragelemente keine rohrförmig hohlen, sondern stangenförmige Streben zu verwenden. Diese stangenförmigen Streben können einen vergleichsweise geringeren Durchmesser aufweisen als die den Energiespeicher aufnehmenden, rohrförmigen Streben des Gepäckträgers, nämlich einen Durchmesser wie ihn die Streben herkömmlicher marktüblicher Gepäckträger aufweisen, um auf diese Weise eine problemlose Aufnahme sämtlicher Gepäckstücke zu ermöglichen, deren Halterungen gegebenenfalls an diese marktüblichen Strebendurchmesser angepasst sind.

Alternativ zu der beschriebenen Ausgestaltung, bei welcher die Streben des Gepäckträgers selbst das Gehäuse des Energiespeichers bilden, kann vorteilhaft vorgesehen sein, das Gehäuse des Energiespeichers als Kasten auszugestalten, der beispielsweise in bekannter Weise als Akkubox bezeichnet werden kann. Als Energiespeicher kommen vorschlagsgemäß sämtliche Varianten möglicher Energiespeicher in Frage, beispielsweise auch Batterien, jedoch insbesondere bevorzugt aufladbare Energiespeicher wie Akkumulatoren oder Kondensatoren. Die Bezeichnung "Akkubox" stellt daher keine Einschränkung auf die Verwendung von Akkumulatoren als Energiespeicher dar.

Durch die Verwendung eines vom übrigen Gepäckträgers separaten Kastens als Gehäuse für den Energiespeicher ergibt sich vorteilhaft eine größere gestalterische Freiheit bei der Konstruktion des Gepäckträgers, denn den gestalterischen Erfordernissen an das Gehäuse kann vergleichsweise unabhängig von den Anforderungen entsprochen werden, die an die Konstruktion des übrigen Gepäckträgers beispielsweise hinsichtlich dessen Statik zu stellen sind. Zudem kann die Ausgestaltung als Kasten vorteilhaft ermöglichen, das Gehäuse des Energiespeichers problemlos von dem übrigen Gepäckträger zu entfernen, so dass beispielsweise das Fahrrad an einem gewünschten Abstellplatz, beispielsweise im Freien, verbleiben kann und der Energiespeicher abgenommen werden kann, um diesen in einer geschützten, trockenen Umgebung elektrisch aufladen zu können. In diesem Zusammenhang ist darauf hinzuweisen, dass der Begriff des "Kastens" im Rahmen des vorliegenden Vorschlages lediglich ein geschlossenes Gehäuse unabhängig von einer bestimmten Formgestaltung bezeichnet, so dass ein "Kasten" im Sinne des vorliegenden Vorschlages nicht notwendigerweise eine quaderförmige Grundform, geradlinige Kanten und flache, ebene Flächen aufweisen muss, sondern beliebige andere Formen annehmen kann und vielmehr ein Gehäuse mit festen Wänden bezeichnet.

Es kann vorgesehen sein, dass dieser Kasten eine Komponente einer Systemhalterung bildet, was eine schnelle und unkomplizierte Montage bzw. Demontage ermöglicht. Derartige Systemhalterungen sind beispielsweise von den Firmen Ortlieb (Hersteller von Gepäckstücken) oder Racktime (Hersteller von Fahrrad-Gepäckträgern) aus der Praxis bekannt. Sie können z. B. die Befestigung des Kastens mittels einer Schnapp- bzw. Rasthalterung am Gepäckträger ermöglichen.

Bei entsprechender mechanischer Belastbarkeit des Kastens kann auch vorgesehen sein, dass der Kasten seinerseits eine Befestigung von weiteren System-Halteelementen wie z. B. einer Federklappe mittels der erwähnten Schnapp- bzw. Rasthalterung ermöglicht.

Bei einer Ausgestaltung des Energiespeichers mit einem kastenartigen, vom übrigen Gepäckträger entfernbaren Gehäuse kann vorteilhaft erstens vorgesehen sein, zu Gunsten einer problemlosen Montage und Demontage einerseits komplementäre, also miteinander zusammenwirkende elektrische Kontakte am Gehäuse einerseits und am übrigen Gepäckträger andererseits vorzusehen, so dass automatisch eine elektrische Kontaktierung erfolgt, wenn der Energiespeicher am übrigen Gepäckträger montiert wird, und so dass dementsprechend eine besonders einfache Montage des Energiespeichers ermöglicht wird, ohne dass zusätzlich Kabel, Steckverbindungen o. dgl. separat und manuell bedient werden müssen.

Dabei ist zweitens vorgesehen, dass neben diesen elektrischen Kontakten auch komplementäre mechanische Verbindungsmittel, insbesondere Führungsmittel am Gehäuse einerseits und an dem übrigen Gepäckträger andererseits vorgesehen sind, so dass beim Ansetzen des Gehäuses an den übrigen Gepäckträger und bei der anschließenden weiteren Bewegung des Gehäuses dieses automatisch so an die elektrischen Kontakte herangeführt wird, dass schließlich die automatische elektrische Kontaktierung erfolgt. Dabei können vorteilhaft auch noch mechanische Rastmittel vorgesehen sein, die beispielsweise in Art einer Schnappverbindung automatisch das Gehäuse des Energiespeichers am übrigen Gepäckträger festlegen, wenn das Gehäuse seine endgültige Montagestellung am übrigen Gepäckträger einnimmt. Auf diese Weise wird die Handhabung des Energiespeichers weiter vereinfacht, da zusätzliche Haltemittel, insbesondere zusätzlich zu handhabende separate Gegenstände zur Befestigung des Gehäuses am übrigen Gepäckträger nicht erforderlich sind.

Nachdem der Kasten an dem übrigen Gepäckträger gehalten ist, können problemlos zusätzliche Riegelmittel betätigt werden, beispielsweise in Form eines Schlosses, um den Kasten einerseits zuverlässig verliersicher am übrigen Gepäckträger festzulegen, und um andererseits einen Diebstahlschutz zu ermöglichen.

Vorteilhaft kann der Kasten oberhalb des Hinterrades angeordnet sein. Auf diese Weise wird eine problemlose Zugänglichkeit zu dem Energiespeicher ermöglicht, und durch die Integration des Gehäuses des Energiespeichers in die gesamte Konstruktion des Gepäckträgers kann dennoch ein vorteilhafter, vergleichsweise niedriger Schwerpunkt des gesamten Gepäckträgers bzw. des gesamten Fahrrades ermöglicht werden. Alternativ kann vorteilhaft der Kasten seitlich vom Hinterrad vorgesehen sein. Wenn der Hinterrad-Gepäckträger seitlich vom Hinterrad angeordnete, aufwärts verlaufenden Tragstreben aufweist, die sich bis zu der Ladefläche erstrecken und diese stützen, kann ein Freiraum genutzt werden, der sich, in Fahrradlängsrichtung gesehen, zwischen den aufrecht verlaufenden Tragstreben und dem Hinterrad befindet. Dieser Raum ist für die Aufnahme von Gepäck ohnehin unzugänglich, da die Gepäckstücke üblicherweise den Tragstreben des Gepäckträgers außen anliegen. Je nachdem, ob der Kasten teilweise oder ganz in diesen Freiraum eintaucht, wird durch die Nutzung dieses Freiraumes die Breite der Gepäckaufhängung gar nicht oder nur unwesentlich vergrößert. Zudem kann durch die Anordnung des Energiespeichers in diesem Bereich ein besonders niedriger Schwerpunkt verwirklicht werden. Schließlich bleibt durch die Anordnung des Energiespeichers in diesem Bereich die Ladefläche des Hinterradgepäckträgers nach wie vor voll nutzbar, und zwar in einer geringen Höhe, was die Schwerpunktlage des gesamten, insbesondere beladenen, Gepäckträgers positiv beeinflusst.

Wenn die beiden Freiräume beiderseits des Hinterrades für die Unterbringung von zwei Kästen genutzt werden, so können die beiden Gehäuse der beiden elektrischen Teil-Speicher elektrisch auf dieselbe Art zusammengeschaltet werden, wie die ansonsten in einem gemeinsamen Gehäuse angeordneten, mehreren Zellen eines elektrischen Energiespeichers auch zusammengeschaltet sind.

In Kombination beider Anordnungsmöglichkeiten kann vorteilhaft vorgesehen sein, das Gehäuse des Energiespeichers sowohl oberhalb als auch seitlich vom Hinterrad anzuordnen und dementsprechend den Kasten mit einer nach unten offenen, U-förmigen Querschnittsform auszugestalten. Durch die vergleichsweise große Fläche, die ein solcher Kasten aufweist, können die einzelnen Zellen bzw. Elemente des Energiespeichers in den Kasten großflächig verteilt werden. Daher kann der Kasten vergleichsweise flach ausgestaltet werden, so dass eine sehr geringe Aufbauhöhe des Energiespeichers oberhalb des Hinterrades bewirkt wird und die Gepäckstücke auch seitlich optimal nah am Hinterrad montiert werden können, insbesondere, wenn der Kasten auch noch in die oben erwähnten Freiräume eintaucht. Zudem sind Teile des Energiespeichers seitlich neben dem Hinterrad angeordnet, so dass sich insgesamt ein sehr tiefer Schwerpunkt des Energiespeichers und damit des gesamten Gepäckträgers ergibt.

Die Tragelemente, die durch das Gehäuse des Energiespeichers gebildet werden, können je nach Ausgestaltung des Gehäuses unterschiedlich ausgeführt werden, beispielsweise als Vorsprünge, an die etwas angehängt oder auf die etwas aufgesteckt werden kann, oder als Ausnehmungen, in die etwas hinein- oder durch die etwas hindurchgeführt werden kann, oder sie können als eine Komponente einer Systemhalterung ausgestaltet werden. Wenn das als Kasten bezeichnete Gehäuse beispielsweise im Spritzgussverfahren hergestellt wird, können die Tragelemente als vorstehende Laschen o. dgl. ausgestaltet sein. Vorteilhaft kann jedoch vorgesehen sein, die Tragelemente als Stangen auszugestalten, so dass beispielsweise unabhängig von der Form und dem Material des Gehäuses des Energiespeichers die Stangen aus einem metallischen Vollmaterial bestehen können und dementsprechend belastbar sind. Die Integration in beispielsweise ein aus Kunststoff gebildetes Gehäuse des Energiespeichers kann vorteilhaft dadurch erfolgen, dass diese Stangen beim Spritzvorgang des Gehäuses von dem Gehäusewerkstoff umspritzt werden, so dass keine zusätzlichen Montageschritte bei der Herstellung des Gehäuses erforderlich sind und zudem die Stangen auch nicht versehentlich gelockert oder demontiert werden können, da keine dementsprechenden Beschlagelemente vorgesehen sind.

Die Tragelemente können über das eigentliche Gehäuse des Energiespeichers hinausragen, wenn beispielsweise das Gehäuse als Kasten ausgestaltet ist. Es kann jedoch vorteilhaft vorgesehen sein, dass die Tragelemente in die Außenkontur des kastenförmigen Gehäuses integriert sind, so dass eine optimal nah am Hinterrad befindliche Halterung der Gepäckstücke ermöglicht wird. Dabei sind die Tragelemente an solchen Stellen vorgesehen, beispielsweise in einem solchen Abstand voneinander, dass sie die Befestigungsmittel aufnehmen können, die an handelsüblichen Fahrrad-Gepäckstücken vorgesehen sind und die dementsprechend typische Abstände zueinander aufweisen. Alternativ dazu können die Tragelemente als eine umlaufende Reling ausgestaltet sein, die an dem Kasten befestigt ist, so dass nahezu stufenlos unterschiedliche Abstände bzw. unterschiedliche Positionen zur Befestigung des Gepäcks zur Verfügung stehen.

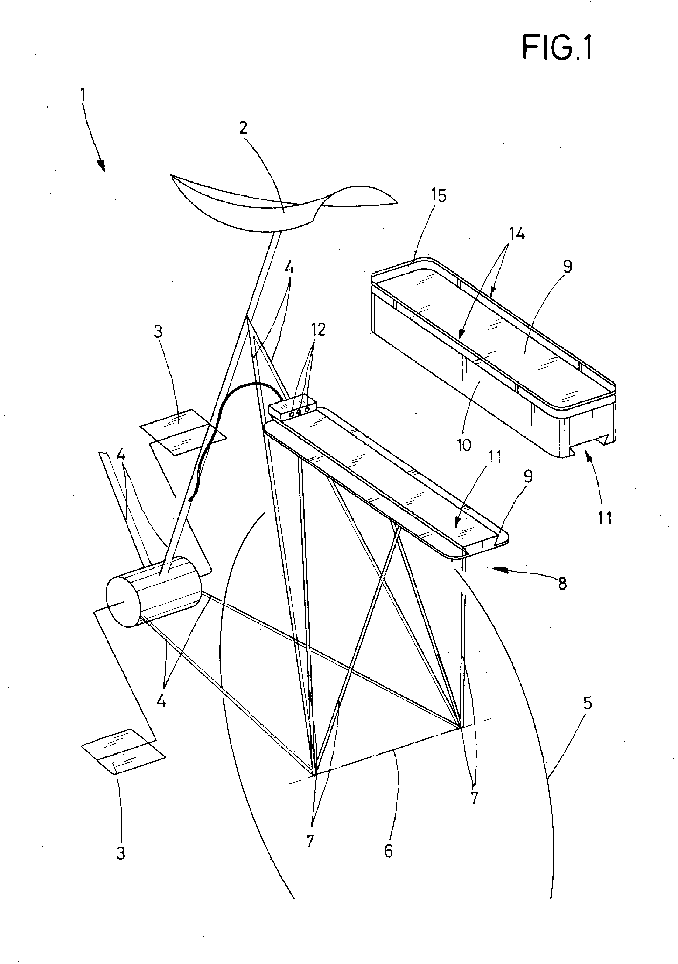

Ausführungsbeispiele der Erfindung werden anhand der rein schematischen Darstellungen nachfolgend näher erläutert. Dabei zeigen die
- Fig. 1 bis 5: unterschiedliche Ausführungsbeispiele von Hinterrad-Gepäckträgern.

In Fig. 1 ist von einem schematisch angedeuteten Fahrrad 1 lediglich der hintere Bereich dargestellt, so dass beispielsweise ein Sattel 2, Pedale 3 und mehrere zum Rahmen des Fahrrades 1 gehörende Streben 4 ersichtlich sind.

Ein Hinterrad 5 weist eine Achse 6 auf. Von der Nähe der beiden Enden dieser Achse 6 verlaufen Tragstreben 7 eines Hinterrad-Gepäckträgers 8 nach oben, wo sie oberhalb des Hinterrades 5 an eine liegend ausgerichtete Ladefläche 9 anschließen. Rein beispielhaft ist bei dem dargestellten Ausführungsbeispiel der Fig. 1 die Ladefläche 9 als eine Platte dargestellt, wobei alternativ die Ladefläche 9 auch durch Streben gebildet sein könnte. Bei dem Ausführungsbeispiel der Fig. 1 ist vorgesehen, dass ein Gehäuse 10 eines elektrischen Energiespeichers und die Ladefläche 9 komplementäre Führungselemente 11 in Form einer Schwalbenschwanzführung aufweisen. Zudem weisen sie komplementäre elektrische Kontakte 12 auf, wobei die elektrischen Kontakte 12 des Gehäuses 10 in Fig. 1 nicht ersichtlich sind und die zugehörigen Kontakte 12 des übrigen Gepäckträgers an der Ladefläche 9 in einer Kontaktbox zusammengefasst sind.

Das Gehäuse 10 weist auf seiner Oberfläche Tragelemente 14 zur Gepäckaufnahme auf, die als eine geschlossene, umlaufende Reling 15 ausgestaltet sind, so dass an diese Reling 15 entweder Taschen mithilfe entsprechender Haken angehängt werden können, mithilfe von Seilen, Spanngurten o. dgl. Gepäckstücke oben auf dem Gehäuse 10 gehalten werden können.

Das Gehäuse 10 des elektrischen Energiespeichers bildet mit seiner ebenen Oberseite ebenfalls eine Ladefläche 9 des Gepäckträgers 8, so dass wahlweise diese obere Ladefläche 9 genutzt werden kann, wenn nämlich das Gehäuse 10 am übrigen Gepäckträger montiert ist, und so dass ansonsten, ohne das montierte Gehäuse 10, die untere Ladefläche 9 des Hinterrad-Gepäckträgers 8 zum Gepäcktransport genutzt werden kann.

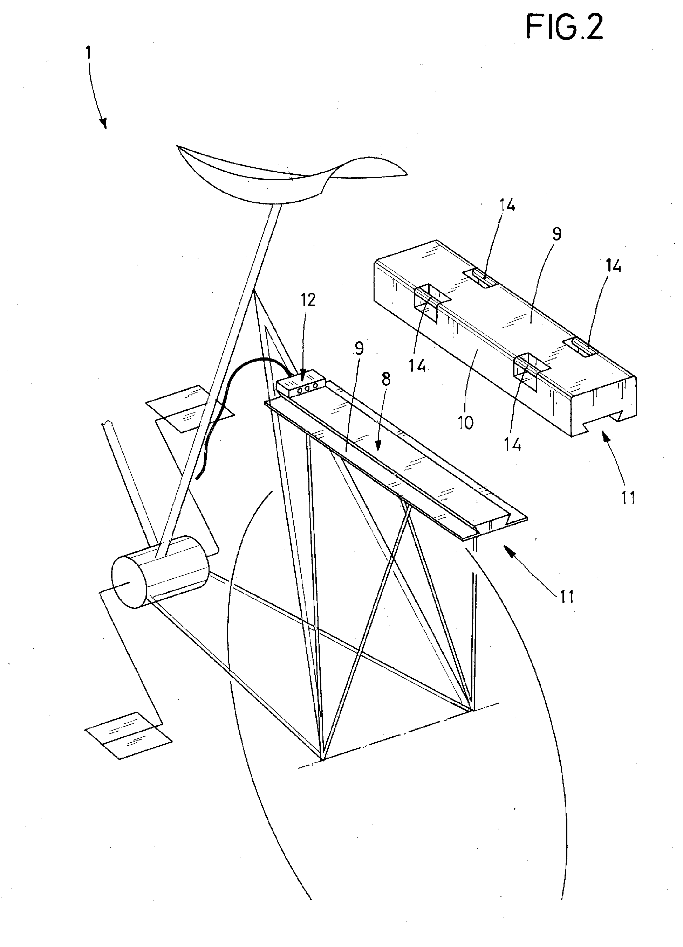

Fig. 2 zeigt ein Ausführungsbeispiel, welches in vielen Aspekten dem der Fig. 1 entspricht. Das Gehäuse 10 des elektrischen Energiespeichers ist jedoch derart ausgestaltet, dass die Tragelemente 14 nicht oberhalb der Kontur des eigentlichen Gehäuses 10 vorgesehen sind. Sie sind vielmehr in die Kontur des Gehäuses 10 integriert, so dass auf diese Weise Gepäck, welches an die Tragelemente 14 angehängt wird, bei ansonsten gleichen Gehäuseabmessungen niedriger positioniert ist als beim Ausführungsbeispiel der Fig. 1. Somit weist der mit Gepäck beladene Gepäckträger 8 einen niedrigeren Schwerpunkt auf.

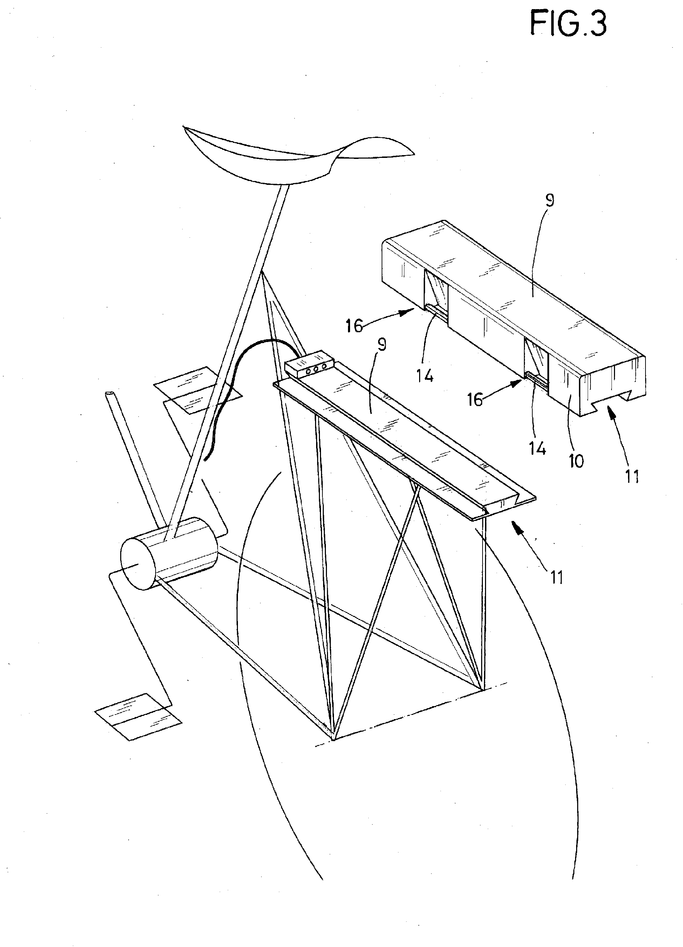

Fig. 3 zeigt ein weiteres Ausführungsbeispiel, ähnlich dem der Fig. 2, wobei jedoch die Tragelemente 14 nicht im oberen Bereich, sondern im unteren Bereich des Gehäuses 10 vorgesehen sind. Die obere Ladefläche 9 des Gehäuses 10 ist ununterbrochen, und keilförmige, sich nach unten erweiternde Ausnehmungen 16 ermöglichen den problemlosen Zugang zu den Tragelementen 14. Bei den Ausführungsbeispielen der Fig. 2 und 3 sind die Tragelemente 14 in Form zweier Stangen ausgestaltet, von denen jeweils eine auf jeder Längsseite des Gehäuses 10 vorgesehen und vom Gehäusewerkstoff umgeben ist, beispielsweise von Kunststoff umspritzt ist.

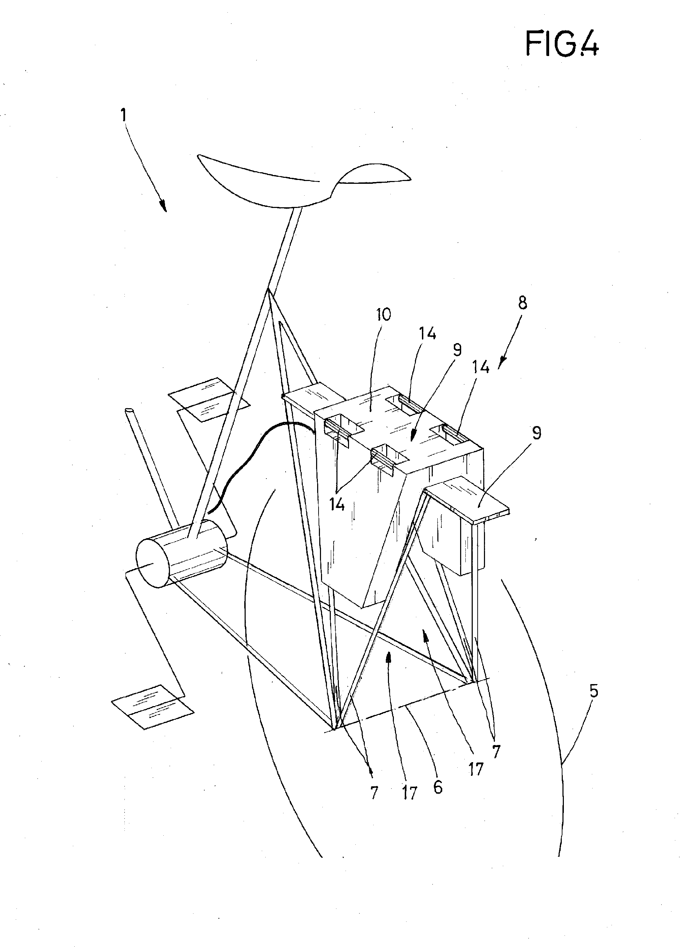

Fig. 4 zeigt ein Ausführungsbeispiel, bei dem das Gehäuse 10 des elektrischen Energiespeichers ebenso wie bei den Ausführungsbeispielen der Fig. 1 bis 3 als Kasten ausgestaltet ist, in diesem Fall jedoch als Kasten mit einem U-förmigen, nach unten offenen Querschnitt, so dass sich das Gehäuse 10 sowohl oberhalb als auch jeweils seitlich vom Hinterrad 5 erstreckt. Die Tragstreben 7 des Hinterrad-Gepäckträgers 8 verlaufen auch bei diesem Ausführungsbeispiel aufrecht zu einer ersten Ladefläche 9, die nach hinten über das Gehäuse 10 hinausragt. Das Gehäuse 10 erstreckt sich mit seinen beiden seitlichen, nach unten weisenden Abschnitten jeweils zwischen die zwei V-förmig nach oben auseinander laufenden Tragstreben 7. Es bildet dabei einen nur geringen Überstand nach außen und erstreckt sich im Übrigen in einen Freiraum 17 hinein, der sich beiderseits des Hinterrades 5 zwischen diesem und den Tragstreben 7 ergibt. Da die Tragstreben 7, in Fahrradlängsrichtung gesehen, nahezu vertikal nach oben verlaufen, ergibt sich nach oben, zur Ladefläche 9 des Gepäckträgers 8 hin, ein vergleichsweise großer Freiraum 17, der zur Gepäckaufnahme nicht genutzt wird und der die Aufnahme des Gehäuses 10 ermöglicht.

Das insgesamt etwa U-förmige Gehäuse 10 gemäß Fig. 4 bildet oben eine Ladefläche 9 des Hinterrad-Gepäckträgers 8 aus, die bei montiertem Gehäuse 10 genutzt werden kann, wobei das Gehäuse 10 weiterhin zwei integrierte Stangen aufweist, die ähnlich wie bei den vorbeschriebenen Ausführungsbeispielen jeweils Tragelemente 14 zur Aufnahme von Gepäckstücken bilden.

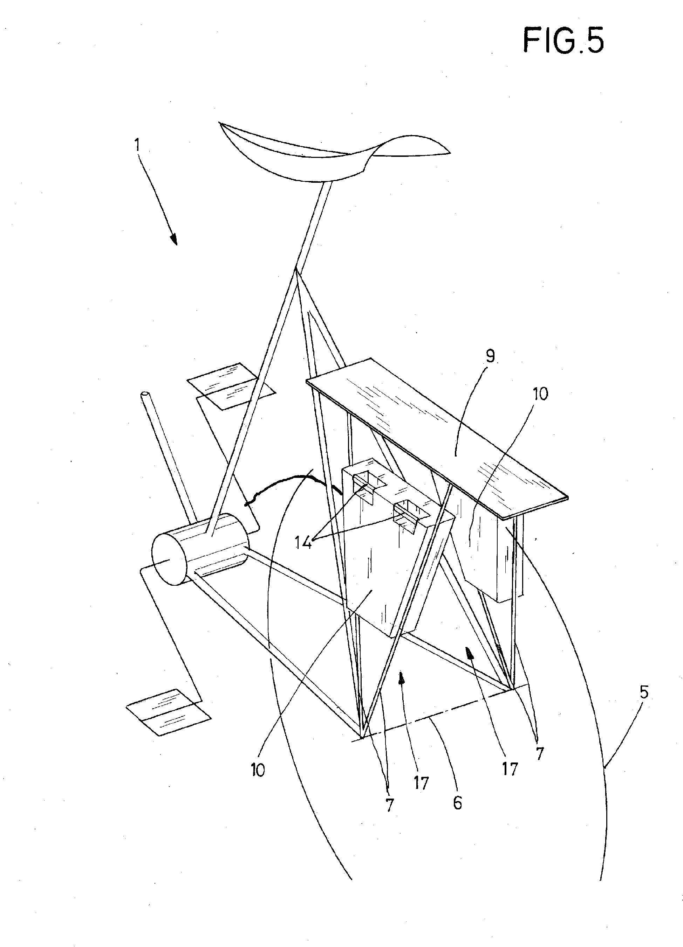

Fig. 5 zeigt ein weiteres Ausführungsbeispiel, bei dem allerdings zwei Gehäuse 10 vorgesehen sind, die, ähnlich wie beim Ausführungsbeispiel der Fig. 4, ebenfalls in die Freiräume 17 beiderseits des Hinterrades 5 eintauchen, so dass das Gepäck möglichst eng am Hinterrad 5 anliegend gehalten wird. Bei diesem Ausführungsbeispiel ist die einzige vorgesehene Ladefläche 9 am oberen Ende der Tragstreben 7 vorgesehen, so dass diese Ladefläche 9 in an sich bekannter und herkömmlicher Weise wie bei üblichen Hinterrad-Gepäckträgern ausgestaltet werden kann, ohne auf die speziellen Belange der Montage eines Energiespeichers Rücksicht nehmen zu müssen. Auf diese Weise kann die Ladefläche 9 problemlos an bestehende Systeme zur Gepäckhalterung oder Gepäcksicherung angepasst oder mit einer Federklappe versehen werden.

## Patentansprüche

1. Hinterrad-Gepäckträger eines Fahrrads,
mit einer oberhalb des Hinterrades angeordneten, liegend ausgerichteten Ladefläche,
Tragelementen zur Aufnahme von als Tasche, Korb, Box oder ähnlicher Behälter ausgestaltetem Gepäck,
und einem in einem Gehäuse angeordneten Energiespeicher für elektrische Energie,
**dadurch gekennzeichnet,**
**dass** das Gehäuse (10) des Energiespeichers die Tragelemente (14) zur Gepäckaufnahme aufweist.

2. Gepäckträger nach Anspruch 1,
**dadurch gekennzeichnet,**
**dass** das Gehäuse (10) des Energiespeichers als eine oder mehrere rohrförmige Streben des Gepäckträgers (8) ausgebildet ist.

3. Gepäckträger nach Anspruch 1,
**dadurch gekennzeichnet,**
**dass** das Gehäuse (10) des Energiespeichers als Kasten ausgebildet ist.

4. Gepäckträger nach Anspruch 3,
**dadurch gekennzeichnet,**
**dass** das Gehäuse (10) von dem übrigen Gepäckträger (8) entfernbar ausgebildet und an dem übrigen Gepäckträger (8) lösbar befestigt ist.

5. Gepäckträger nach Anspruch 4,
**dadurch gekennzeichnet,**
**dass** an dem Gehäuse (10) des Energiespeichers und an dem übrigen Gepäckträger (8) zusammenwirkende elektrische Kontakte (12) vorgesehen sind,
und **dass** an dem Gehäuse (10) des Energiespeichers und an dem übrigen Gepäckträger (8) zusammenwirkende Führungsmittel (11) vorgesehen sind.

6. Gepäckträger nach Anspruch 3,
**dadurch gekennzeichnet,**
**dass** das Gehäuse (10) oberhalb des Hinterrades (5) angeordnet ist.

7. Gepäckträger nach Anspruch 3,
**dadurch gekennzeichnet,**
**dass** das Gehäuse (10) seitlich vom Hinterrad (5) angeordnet ist.

8. Gepäckträger nach den Ansprüchen 6 und 7,
**dadurch gekennzeichnet,**
**dass** das Gehäuse (10) einen nach unten offenen, U-förmigen Querschnitt aufweist.

9. Gepäckträger nach einem der vorhergehenden Ansprüche, **dadurch gekennzeichnet,**
**dass** die Tragelemente (14) als Stangen ausgestaltet sind.

10. Gepäckträger nach den Ansprüchen 3 und 9,
**dadurch gekennzeichnet,**
**dass** die stangenförmigen Tragelemente (14) in die Außenkontur des kastenförmigen Gehäuses (10) integriert sind.

11. Gepäckträger nach den Ansprüchen 6 und 9,
**dadurch gekennzeichnet,**
**dass** die Tragelemente (14) als umlaufende Reling (15) ausgestaltet sind, die an dem Gehäuse (10) befestigt ist.

12. Gepäckträger nach einem der vorhergehenden Ansprüche, **dadurch gekennzeichnet,**
**dass** seitlich vom Hinterrad angeordnete, aufwärts verlaufenden Tragstreben vorgesehen sind, die sich bis zu der Ladefläche erstrecken und diese stützen,
und **dass** sich das Gehäuse (10) wenigstens teilweise in einen seitlich vom Hinterrad (5) zwischen dem Hinterrad (5) und den Tragstreben (7) vorgesehenen Freiraum (17) erstreckt.
